# EUROPEAN PATENT APPLICATION

(11) **EP 2 527 686 A1**
(43) Date of publication of application: **28.11.2012**
(21) Application number: 11167133.5
(22) Date of filing: 23.05.2011
(51) Int. Cl.: F16H 1/28, F16H 3/56, F16H 3/52

(54) **Woflrom planetary gearing**

(71) Applicant: Liu, Chao-Tien, Taipei (TW)
(72) Inventor: Liu, Chao-Tien, Taipei (TW)
(74) Representative: Caldwell, Judith Margaret

(57) **Abstract**

A transmission assembly has a carrier (50), a first sun gear (10), a first planetary gear (30), a second planetary gear (40) and a second sun gear (20). The first sun gear (10) has a number of teeth. The first planetary gear (30) engages the first sun gear (10) and has a number of teeth. The second planetary gear (40) is connected to and driven with the first planetary gear (30) and has a number of teeth. The second sun gear (20) co-axially aligns with the first sun gear (10), engages the second planetary gear (40) and has a number of teeth. One of the group of the sun gears (10,20) and the planetary gears (30,40) has the same number of teeth, and the other group of the sun gears (10,20) and the planetary gears (30,40) has a difference of the numbers of teeth at most of two.

## Description

### 1. Field of the Invention

The present invention relates to a transmission assembly, and more particularly to an epicyclic gear train transmission assembly that has a high reduction gear ratio as that of a worm rod-gear assembly.

### 2. Description of Related Art

An epicyclic gear train system is one kind of planetary gear train systems, but the conventional planetary gear train systems have limitations in using gears of specific number of teeth. The conventional epicyclic gear train system cannot achieve reduction gear ratio as that achieved by a worm rod-gear system and has to be further improved.

In addition, a conventional planetary gear train reduction device comprises two sets of corresponding sun and planetary gears having the same module. To fit with the same center distance of the sets of the sun and planetary gears, the numbers of the teeth of the sun and planetary are limited to specific numbers. Accordingly, the reduction gear ratio of the conventional planetary gear train reduction device is limited and cannot achieve a high reduction gear ratio.

To overcome the shortcomings, the present invention tends to provide an epicyclic gear train transmission assembly to mitigate or obviate the aforementioned problems.

The main objective of the invention is to provide an epicyclic gear train transmission assembly that has a high reduction gear ratio as that of a worm rod-gear assembly

The transmission assembly has a carrier, a first sun gear, a first planetary gear, a second planetary gear and a second sun gear. The first sun gear has a number of teeth N1. The first planetary gear is mounted on the carrier, engages the first sun gear and has a number of teeth N2. The second planetary gear is mounted on the carrier, is connected to and driven with the first planetary gear and has a number of teeth N3. The second sun gear co-axially aligns with the first sun gear, engages the second planetary gear and has a number of teeth N4. One of the group of the sun gears and the planetary gears (N1,N4 and N2,N3) has the same number of teeth, and the other group of the sun gears and the planetary gears (N1,N4 and N2,N3) has a difference of the numbers of teeth at most of two.

Other objects, advantages and novel features of the invention will become more apparent from the following detailed description when taken in conjunction with the accompanying drawings.

### IN THE DRAWINGS

Fig. 1 is a side view in partial section of a first embodiment of an epicyclic gear train transmission assembly in accordance with the present invention;
Fig. 2 is a side view in partial section of a second embodiment of an epicyclic gear train transmission assembly in accordance with the present invention;
Fig. 3 is an enlarged side view in partial section of a connecting device of a third embodiment of an epicyclic gear train transmission assembly in accordance with the present invention;
Fig. 4 is an enlarged side view in partial section of a connecting device of a fourth embodiment of an epicyclic gear train transmission assembly in accordance with the present invention;
Fig. 5 is a side view in partial section of a fifth embodiment of an epicyclic gear train transmission assembly in accordance with the present invention;
Fig. 6 is a side view in partial section of a sixth embodiment of an epicyclic gear train transmission assembly in accordance with the present invention in a reduction gear mode; and
Fig. 7 is a side view in partial section of the epicyclic gear train transmission assembly in Fig. 6 in a speed-increasing mode.

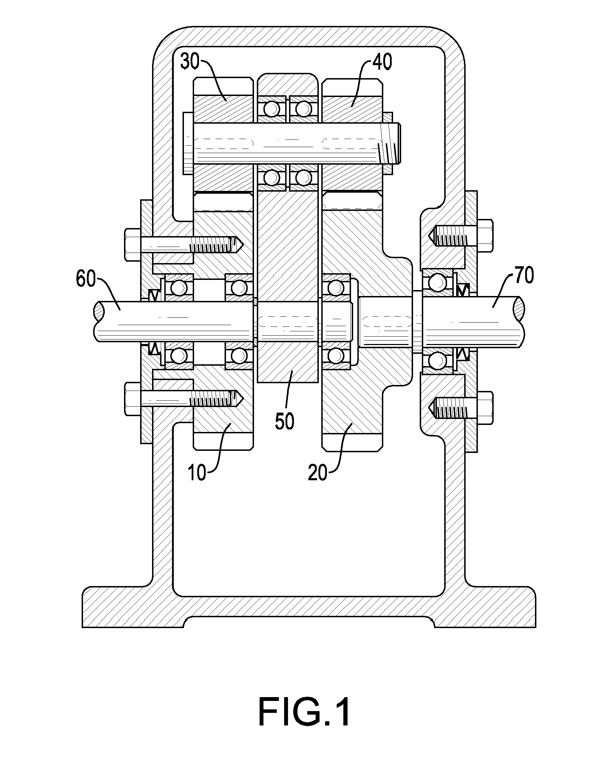

With reference to Fig. 1, a transmission assembly in accordance with the present invention is an epicyclic gear train transmission assembly and comprises a first sun gear 10, a first planetary gear 30, a second sun gear 20, a second planetary gear 40 and a carrier 50. The first sun gear 10 has a number of teeth N1. The first planetary gear 30 is mounted on the carrier 50, engages the first sun gear 10 and has a number of teeth N2. The second planetary gear 40 is mounted on the carrier 50, is connected to and driven with the first planetary gear 30 and has a number of teeth N3. The second sun gear 20 is co-axially aligned with the first sun gear 10, engages the second planetary gear 40 and has a number of teeth N4. One of the group of the sun gears 10,20 and the planetary gears 30,40 has the same number of teeth, and the other group of the sun gears 10,20 and the planetary gears 30,40 has a difference of the numbers of teeth at most of two. For example, the sun gears 10,20 may have the same number of teeth, and the difference of the numbers of teeth of the planetary gears 30,40 may be one or two, vice versa.

In addition, the first sun gear 10 is stationary and kept from rotating and is defined as a securing sun gear. To secure the first sun gear 10, fasteners, such as bolts are mounted through a housing and securely into the first sun gear 10. Alternatively, a securing pin is inserted through a securing disc that is mounted securely on the first sun gear 10 and is securely into the housing, such that the first sun gear 10 is kept from rotating relative to the housing. The second sun gear 20 is rotatable and is defined as a driven sun gear. The sun gears 10,20 may be straight spur gears or bevel gears. The carrier 50 may be a round disk, is rotatable and is connected securely with an input axle 60 that is mounted rotatably through the first sun gear 10, such that the carrier 50 can be rotated with the input axle 60. An output axle 70 is connected securely to and rotated by the second sun gear 20. The planetary gears 30,40 are mounted co-axially on the carrier 50 and are rotated co-axially.

Furthermore, the first sun gear 10 and the first planetary gear 30 have the same module, and the second sun gear 20 and the second planetary gear 40 have the same module different from that of the first sun gear 10 and the first planetary gear 30. For example, the planetary gears 30,40 have the same number of teeth, N2=N3=14. The numbers of teeth of the sun gears 10, 20 may have a difference of 1, N1=29 and N4=30. The module of the second sun gear 20 and the second planetary gear 40 may be 4, such that the center distance between the second sun gear 20 and the second planetary gear 40 is 4*(N3+N4)/2=88 (millimeter, mm). The module of the first sun gear 10 and the first planetary gear 30 may be 4.09302, such that the center distance between the first sun gear 10 and the first planetary gear 30 is 4.09302 *(N1+N2)/2=88 (mm). Accordingly, the center distances between the sets of the corresponding sun gear 10,20 and the planetary gear 30,40 are the same, and the planetary gears 30,40 can be co-axially connected with each other and can be transmitted with each other actually.

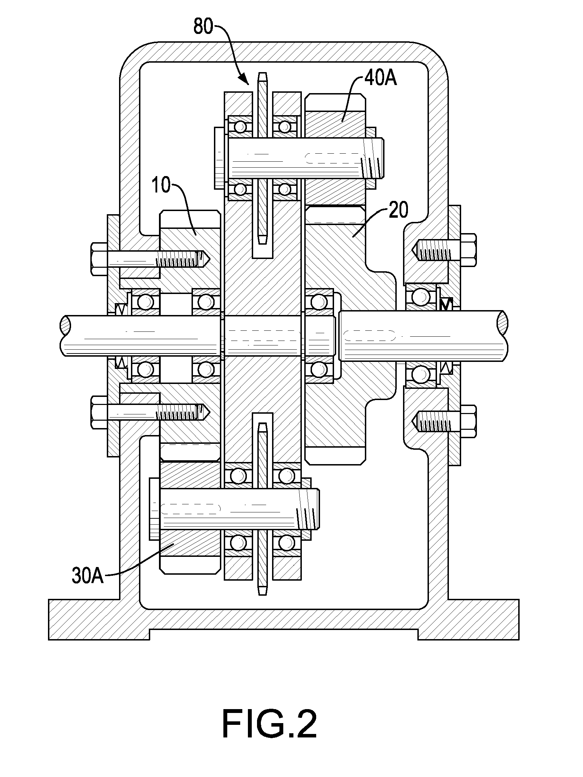

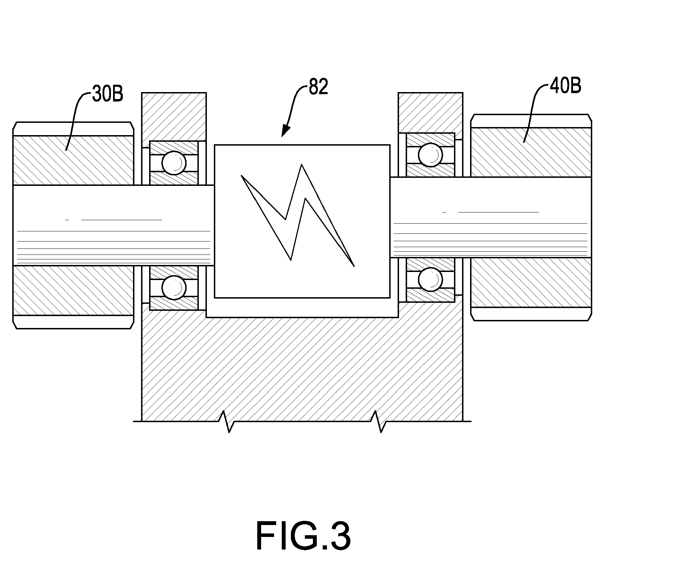

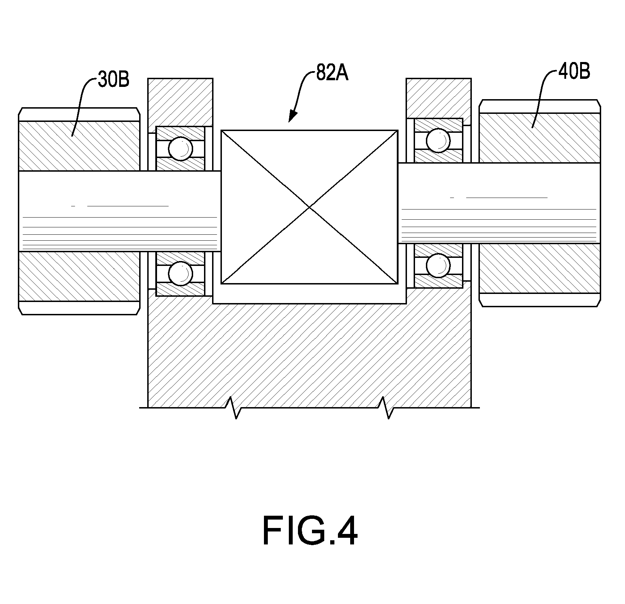

Alternatively, all of the sun gears 10,20 and the planetary gears 30,40 have the same module. The center distance between the first sun gear 10 and the first planetary gear 30 has a difference from that between the second sun gear 20 and the second planetary gear 40, and the difference is half of tooth module. Therefore, the first planetary gear 30 and the second planetary gear 40 are non-co-axially mounted on the carrier 50. Thus, with reference to Figs. 2, 3 and 4, a transmission device 80 as shown in Fig. 2 or a connecting device 82,82A as shown in Figs. 3 and 4 is mounted between the planetary gears 30A,30B,40A,40B to drive the planetary gears 30A,30B,40A,40B rotating synchronously. The transmission device 80 may be a chain-wheel assembly, a belt-pulley assembly or the like. The connecting device 82,82A may be an electrical connector or a mechanical connector. The electrical connector may be a wireless digital driving system. The mechanical connector may be a flexible connector, such as a universal connector, a socket connector or a ball joint.

Therefore, the present invention does not limit the modules of the corresponding sun gears 10,20 and the planetary gear 30,40 to be the same or not.

When a power is input from the input axle 60 to drive the input axle 60 to rotate, the carrier 50 is rotated with the input axle 60. Consequently, the planetary gears 30,40 are driven to rotate around the corresponding sun gears 10,20 by the carrier 50. With the engagement between the planetary gears 30,40 and the sun gears 10,20, the planetary gears 30,40 are rotated on the own axes. In the aforementioned example, the numbers of teeth of the planetary gears 30,40 are the same, N2=N3=14, and the numbers of teeth of the sun gears 10,20 have a difference of 1, N1=29, N4=30. When the input axle 60 makes a turn, the carrier 50 is driven to also make a turn and the planetary gears 30,40 also make a turn of revolution around the corresponding sun gears 10,20. With the difference of the numbers of teeth between the sun gears 10,20, the second sun gear 20 is driven by to rotate for one tooth when the input axle 60 makes a turn, the second sun gear 20 is driven by to rotate for two teeth when the input axle 60 makes two turns and so on. Accordingly, the reduction gear ratio of the transmission assembly in accordance with the present invention is 1-(N1*N3/(N2*N4))= 1-(29*14/(14*30))= 1/30.

Alternatively, the numbers of teeth of the sun gears 10,20 may be the same, and the numbers of teeth of the planetary gears 30,40 may have a difference of 1. Therefore, a reduction gear ratio of 1-(N1*N3/(N2*N4)) can be achieved.

When the power is input from the output axle 70 to make the output axle 70 serve as an input axle, the input axle 60 can be served as an output axle. With the arrangement of numbers of teeth of the sun gears 10,20 and the planetary gears 30,40, the rotating speed of the axle 60 that serves as an output axle is higher than that of the axle 70 that server as an input axle. Accordingly, a speed-increasing effect is provided.

Accordingly, the transmission assembly in accordance with the present may have a high reduction gear ratio as that of a worm rod-gear assembly providing by the arrangement of the numbers of teeth of the sun gears 10,20 and the planetary gears 30,40. The transmission assembly can be shifted to a reduction device or a speed-increasing device by change the input direction of the power. Because the transmission efficiency of a spur is almost 95-97% and higher than that of 70-80% of a worm wheel, the transmission efficiency of the transmission assembly is high and achieves the demand of energy saving.

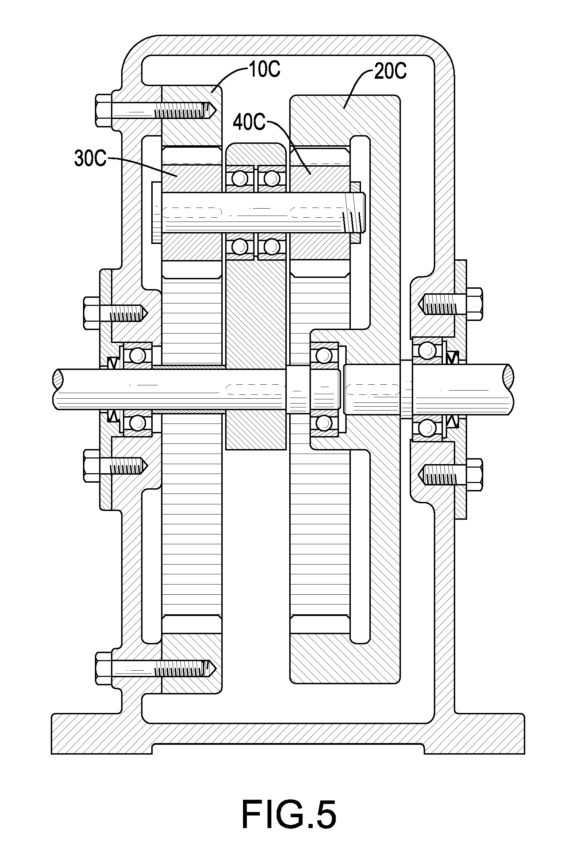

With reference to Fig. 5, the sun gears 10C,20C are internal gears. In this embodiment, the numbers of teeth of the planetary gears 30C,40C may be the same and may be 14. The number of teeth of the first sun gear 30C may be 57, and the number of teeth of the second sun gear 40C may be 58. Accordingly, the reduction gear ratio of the embodiment of the transmission assembly is 1-(N1*N3/(N2*N4))= 1/58.

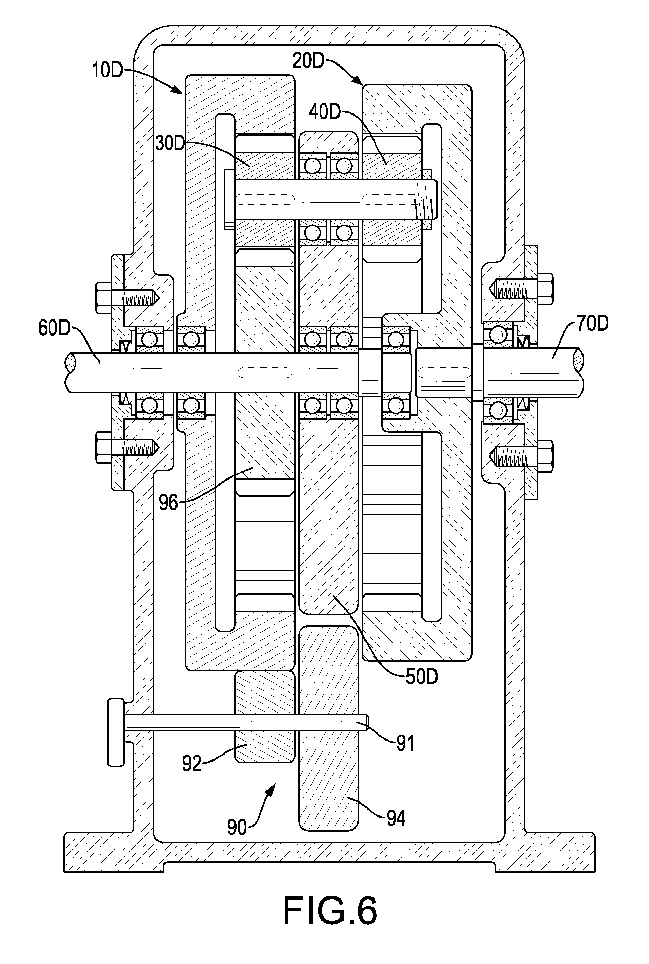

With reference to Fig. 6, the embodiment of the transmission assembly in accordance with the present invention comprises two sun gears 10D,20D, two stationary gears 30D,40D, a carrier 50D, a clutch device 90 and a driven gear 96. The sun gears 10D,20D are co-axially aligned with each other and are internal gears. The planetary gears 30D,40D engage respectively the sun gears 10D,20D and are connected and driven with each other. One of the group of the sun gears 10D,20D and the planetary gears 30D,40D (N1,N4 and N2,N3) has the same number of teeth, and the other group of the sun gears 10D,20D and the planetary gears 30D,40D (N1,N4 and N2,N3) has a difference of the numbers of teeth at most of two.

The carrier 50D is mounted between the sun gears 10D,20D, and the planetary gears 30D,40D are mounted rotatably on the carrier 50D. Preferably, the carrier 50D is co-axially aligned with the sun gears 10D,20D.

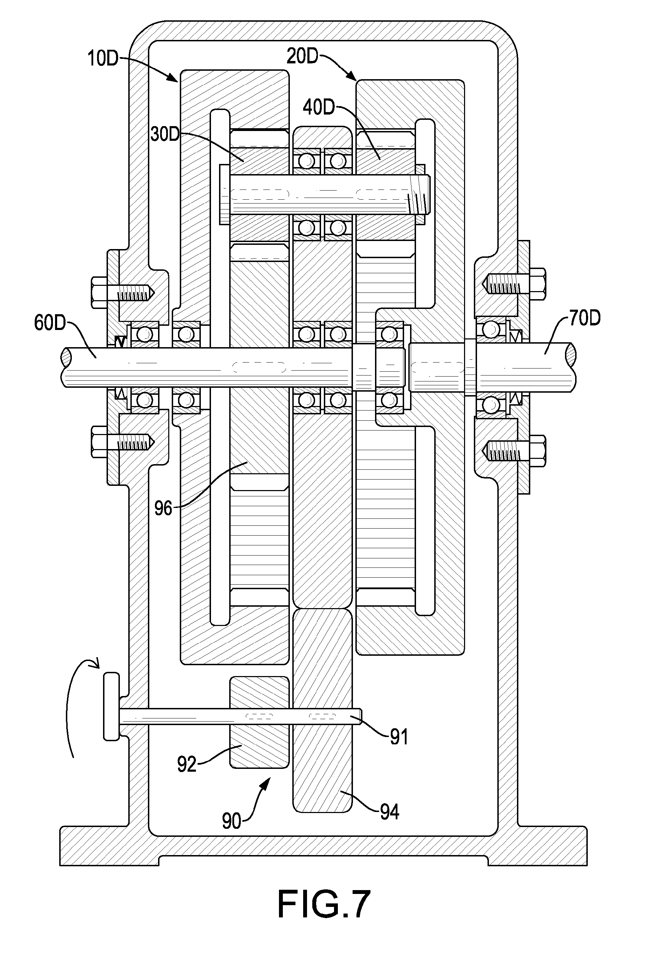

The clutch device 90 comprises a clutch shaft 91, a sun gear limiting cam 92 and a carrier limiting cam 94. The clutch shaft 91 is mounted rotatably on the housing. The sun gear limiting cam 92 is mounted securely on the clutch shaft 91 and corresponds to and selectively abuts against the first sun gear 10D. The carrier limiting cam 92 is mounted securely on the clutch shaft 91 and corresponds to and selectively abuts against the carrier 50D. When one of the limiting cams 92,94 abuts against the corresponding one of the first sun gear 10D and the carrier 50D, the other limiting cam 92,94 is kept from abutting against the corresponding first sun gear 10D or the carrier 50D. That is, with reference to Fig. 6, when the sun gear limiting cam 92 abuts against the first sun gear 10D, the carrier limiting cam 94 is kept from abutting against the carrier 50D. Alternatively, with reference to Fig. 7, when the carrier limiting cam 94 abuts against the carrier 50D, the sun gear limiting cam 92 is kept from abutting against the first sun gear 10D. When the sun gear limiting cam 92 abutting against the first sun gear 10D, the first sun gear 10D is kept from being rotated so as to form as a securing sun gear. The second sun gear 20D is formed as a driven sun gear.

The driven gear 96 is mounted co-axially with the first sun gear 10D, engages the first planetary gear 30D and has a number of teeth N5. The driven gear 96 is connected securely with an input axle 60D that is connected rotatably with the carrier 50D. The second sun gear 20D is connected securely with an output axle 70D.

When a power is input from the input axle 60D and the input axle 60D is rotated, the driven gear 96 is rotated with the input axle 60D and the first planetary gear 30D is also rotated. The second planetary gear 40D can be rotated by the first planetary gear 30D. With the abutment between the sun gear limiting cam 92 and the first sun gear 10D, the first sun gear 10D is fixed and kept from being rotated. Accordingly, the first planetary gear 30D is rotated around the first sun gear 10D, such that the carrier 50D is rotated and the second planetary gear 40D is rotated around the second sun gear 20D. With the arrangement of the numbers of teeth of the sun gears 10D,20D and the planetary gears 30D,40D, a reduction gear ratio of (1-(N1*N3/(N2*N4)))*N5/(N1+N5) is achieved.

For example, the number of teeth of the first sun gear 10D is 57, the number of teeth of the second sun gear 20D is 58, the numbers of teeth of the first and second planetary gear 30D,40D are 14 and the number of teeth of the driven gear 96 is 29. The reduction gear ratio of the transmission assembly is (1-(N1*N3/(N2*N4)))*N5/(N1+N5)=1/58*29/86=1/172.

When the clutch shaft 91 is rotated to make the sun gear limiting cam 92 rotate away from the first sun gear 10D and the carrier limiting cam 94 abut against the carrier 50D, the first sun gear 10D is rotatable and the carrier 50D is fixed and kept from being rotated as shown in Fig. 7. When a power is input from the output axle 70D to make the output axle 70D serve as an input axle, the input axle 60D can be served as an output axle. When the axle 70D that serves as the input axle is rotated, the second sun gear 20D is rotated. Consequently, the second planetary gear 40D is rotated, and the first planetary gear 30D is also rotated. Because the carrier 50D is stationary due to the abutment of the carrier limiting cam 94, the planetary gears 30D,40D do not rotate around the corresponding sun gears 10D,20D. Accordingly, the driven gear 96 and the first sun gear 10D will rotate due to the rotation of and the engagement with the first planetary gear 30D. Thus, a speed increasing ratio of N4*N2/(N3*N5)= 58*14/(14*29)= 2 is achieved.

Therefore, with the rotation of the clutch shaft 91, the transmission assembly can be shifted to a reduction device or a speed-increasing device easily. The use and operation of the transmission assembly is convenient and effectively improved.

## Claims

1. A transmission assembly comprising:
a carrier (50);
a first sun gear (10) having a number of teeth N1;
a first planetary gear (30) mounted on the carrier (50), engaging the first sun gear (10) and having a number of teeth N2;
a second planetary gear (40) mounted on the carrier (50), connected to and driven with the first planetary gear (30) and having a number of teeth N3; and
a second sun gear (20) co-axially aligning with the first sun gear (10), engaging the second planetary gear (40) and having a number of teeth N4, wherein
one of the group of the sun gears (10,20) and the planetary gears (30,40) (N1,N4 and N2,N3) has the same number of teeth, and the other group of the sun gears (10,20) and the planetary gears (30,40) (N1,N4 and N2,N3) has a difference of the numbers of teeth at most of two.

2. The transmission assembly as claimed in claim 1, wherein the first sun gear (10) is stationary and kept from rotating.

3. The transmission assembly as claimed in claim 1 or 2, wherein
the first sun gear (10) and the first planetary gear (30) have the same module; and
the second sun gear (20) and the second planetary gear (40) have the same module different from that of the first sun gear (10) and the first planetary gear (30).

4. The transmission assembly as claimed in claim 3, wherein the first planetary gear (10) and the second planetary gear (30) are co-axially connected to each other and mounted on the carrier (50).

5. The transmission assembly as claimed in claim 1 or 2, wherein all of the sun gears (10,20) and the planetary gears (30A,30B,40A,40B) have the same module.

6. The transmission assembly as claimed in claim 5, wherein the first planetary gear and (30A) the second planetary gear (40A) are non-co-axially mounted on the carrier (50); and
a transmission device (80) is mounted between the first planetary gear (30A) and the second planetary gear (40A) to drive the planetary gears (30A,40A) rotating synchronously.

7. The transmission assembly as claimed in claim 5 further comprising a connecting device (82,82A) mounted between the first planetary gear (30B) and the second planetary gear (40B) to drive the planetary gears (30B,40B) rotating synchronously.

8. The transmission assembly as claimed in claim 1 or 2, wherein the sun gears (10,20) are spur gears.

9. The transmission assembly as claimed in claim 1 or 2, wherein the sun gears (10C,20C) are internal gears.

10. The transmission assembly as claimed in claim 1, wherein
the sun gears (10D,20D) are internal gears;
the carrier (50D) is mounted between the sun gears (10D,20D);
the planetary gears (30D,40D) are mounted rotatably on the carrier (50D); and
the transmission assembly further comprises
a clutch device (90) comprising
a clutch shaft (91);
a sun gear limiting cam (92) mounted securely on the clutch shaft (91) and corresponding to and selectively abutting against the first sun gear (10D); and
a carrier limiting cam (94) mounted securely on the clutch shaft (91) and corresponding to and selectively abutting against the carrier (50D); and
a driven gear (96) mounted co-axially with the first sun gear (10D) and engaging the first planetary gear (30D), wherein
when one of the limiting cams (92,94) abuts against the corresponding one of the first sun gear (10D) and the carrier (50D), the other limiting cam (92,94) is kept from abutting against the corresponding first sun gear (10D) or the carrier (50D).
